# EUROPEAN PATENT SPECIFICATION

(11) **EP 4 453 044 B1**
(45) Date of publication and mention of the grant of the patent: **19.11.2025**
(21) Application number: 22839241.1
(22) Date of filing: 15.12.2022
(51) Int. Cl.: C08F 4/36, C08F 8/12, C08F 16/14, C08F 116/14, C08L 71/02, C08F 2/48

(54) **PERFLUOROPOLYETHER POLYMERS COMPRISING PENDANT FUNCTIONAL GROUPS**
PERFLUORPOLYETHERPOLYMERE MIT HÄNGENDEN FUNKTIONELLEN GRUPPEN
POLYMÈRES DE PERFLUOROPOLYÉTHER AVEC DES GROUPES FONCTIONNELS PENDANTS

(30) Priority: 21.12.2021 EP 21216316
(43) Date of publication of application: 30.10.2024
(73) Proprietor: Syensqo Specialty Polymers Italy S.p.A., 20021 Bollate (MI) (IT)
(72) Inventor: BEA, Michela, 21040 Castronno (VA) (IT); LOTIERZO, Andrea, 20861 Brugherio (MB) (IT)
(74) Representative: Viola, Laura Maria
(86) International application number: PCT/EP2022/086028
(87) International publication number: WO 2023/117657

(56) References cited:
- US-A1- 2010 069 275
- US-A1- 2011 230 631

## Description

### Technical Field

The present patent application relates to new perfluoropolyether polymers comprising functionalized pendant groups along the perfluoropolyether backbone.

### Background Art

Among fluorinated polymers, (per)fluoropolyether polymers (PFPEs) are well-known and of great interest for their chemical and physical properties.

PFPE polymers comprising functional groups along the backbone have been disclosed in the art, being useful as reactive intermediate compounds.

Perfluoropolyether polymers obtained from the reaction of polyperoxidic perfluoropolyether and fluorinated olefin in the presence of U.V. radiation have been disclosed in US 4,500,739 (Montedison S.p.A., February 19, 1985).

US 6,403,539 (Ausimont S.p.A., June 11, 2002) discloses perfluoropolyether polymers containing sulphonyl fluoride groups pending along the backbone. However, the presence of the peroxidic groups is not desired for safety concerns.

Polyfunctional (per)fluoropolyether polymers have been further disclosed in US 5,719,259 (E.I. Du Pont de Nemours and Company, February 17, 1998), US 4,853,097 (Ausimont S.r.l., August 1, 1989), US 5,104,911 (Ausimont S.r.l., April 14, 1992).

US 2011/0230631 (Solvay Solexis S.p.A, September 22, 2011) discloses (per)fluoropolyethers comprising at least one (per)fluoropolyoxyalkylene chain comprising at least one recurring unit of formula -CF₂-CF(CF₂O-SO₂F)-O-, wherein fluorosulfate group in brackets is a pendant group, which is subsequently reacted with a nucleophilic agent to provide functional groups, such as notably carboxylic acid, acyl fluoride, amide and esters

CN 103724559 (ZHONGHAO CHENGUANG RES INST CHEMICAL IND, April 16, 2014) discloses a method comprising placing the perfluoropolyether peroxide prepared by a photo-oxidation method in an inert fluorine-containing solvent, introducing perfluoro-olefin under an ultraviolet irradiation condition, and reacting the perfluoro-olefin with the peroxide to form a stable perfluoropolyether compound.

WO 2019/048394 (Solvay Specialty Polymers Italy S.p.A., March 14, 2019) discloses polyfunctional perfluoropolyether derivatives including a plurality of ionisable groups selected from the group consisting of -SO₃Xa, -PO₃Xa and -COOXa, wherein Xa is H, ammonium group or a monovalent metal.

### Summary of invention

The Applicant developed new perfluoropolyether polymers that can be obtained via the insertion of at least one asymmetric olefin along the perfluoropolyether backbone.

Thus, in a first aspect, the present invention relates to a block copolymer [copolymer (P)] comprising a first and a second perfluoropolyether chain [PFPE chain] each having two chain ends, wherein the first chain end of each one of said first and second PFPE chain is a chain end of copolymer (P) and each one comprises a group selected from a perfluorinated linear or branched alkyl chain comprising from 1 to 6 carbon atoms and -C(=O)F, and the second chain ends of said first and second PFPE chain are bonded to each other via a block of formula (I):

(I) -[A-B]_{z}-

wherein
z is an integer from 1 to 100,
   (A) is a PFPE chain, and
   (B) is at least one group of formula (II): 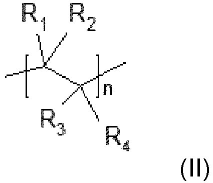 wherein
n is an integer from 1 to 5, preferably from 1 to 2;
R₁ to R₄, each independently, is selected in the group comprising, preferably consisting of, -F, perfluorinated linear or branched alkyl chain having from 1 to 6 carbon atoms, and group of formula (III):

   (III) -R₁₀-(X)_{b}
wherein
R₁₀ is a linear or branched perfluoroalkyl chain comprising from 1 to 12 carbon atoms, preferably containing at least one oxygen atom,
X is a functional group selected from: -COOH, -COF, -CN, -Br and -CONH₂; and
b is an integer equal to 1 or 2;
wherein
* in said formula (1), said (A) and (B) are statistically (randomly) disposed;
* in formula (II), at least one, preferably one, of R₁ to R₄ is group of formula (III); and
* the total number of said groups B in said copolymer (P) is from 1 to 100.

In a second aspect, the present invention relates to a process [process (P)] for the manufacture of copolymer (P) as defined above.

Advantageously, copolymer (P) of the present invention is prepared via process (P) comprising
(a) contacting:
   - at least one perfluoropolyether polymer comprising peroxidic groups [PFPE peroxyl;
   - at least one perfluorinated compound of formula (X-p): 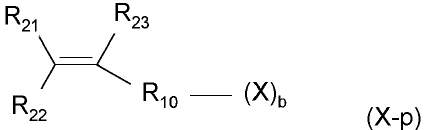 wherein
      each of R₂₁ to R₂₃ is independently -F or perfluorinated linear or branched alkyl chain having from 1 to 6 carbon atoms,
      R₁₀, X and b are as defined above for formula (III);
(b) letting said PFPE peroxy and said compound of formula (X-p) react in the presence of UV radiation or under heating.

In the process (P) according to the present invention, the amount of the at least one perfluorinated compound of formula (X-p) can be properly selected in order to provide a copolymer (P) characterized by either a low or a high content of pendant functional groups along the backbone of said copolymer (P).

In a further aspect, the present invention relates to copolymer (P) obtained via process (P) as described above.

While purification steps can be performed at the end of said process (P), it will be clear to those skilled in the art that the copolymers (P) according to the present invention are obtained at the end of process (P) as a mixture.

Thus, in a further aspect, the present invention relates to a mixture [mixture (P)] comprising two or more copolymers (P) as defined above.

It will be clear to those skilled in the art that mixture (P) is obtained via process (P) as described above.

Advantageously, said mixture (P) can be subjected to one or more purification steps (also referred to as "fractionation" steps), thus obtaining separate copolymers (P) characterized by different number average molecular weights as measured by ¹⁹F-NMR and/or functionality (F), preferably from 3 to 102.

### Description of embodiments

For the purpose of the present description and of the following claims:
- the use of parentheses around symbols or numbers identifying the formulae, for example in expressions like "polymer (P)", etc., has the mere purpose of better distinguishing the symbol or number from the rest of the text and, hence, said parenthesis can also be omitted;
- the acronym "PFPE" stands for "perfluoropolyether" and, when used as substantive, is intended to mean either the singular or the plural form, depending on the context;
- the term "functionality (F)" is intended to indicate the number of functional groups in the copolymer according to the present invention, which includes both the functional groups deriving from group (X) as represented in formula (II) and (X-p) and the functional groups at each chain end of copolymer (P).

In copolymer (P), said first chain end of each one of said first and second PFPE chains can be equal or different from each other and are selected from a perfluorinated alkyl chain comprising 1 to 3 carbon atoms and - C(=O)F.

According to a preferred embodiment, one of said first chain ends of each one of said first and second PFPE chains comprises a group -C(=O)F and the other chain end comprises a perfluorinated alkyl chain comprising from 1 to 3 carbon atoms.

Preferably, in copolymer (P), said at least one PFPE chain (A) is bonded to one chain end and/or to said at least one group (B) via a sigma bond or a group -(C)- selected from -CF₂-, -CF₂CF₂- or -O-.

Preferably, in copolymer (P), said at least one group (B) is bonded to one chain end and/or to said at least one PFPE chain (A) via a sigma bond or a group -(C)- as defined above.

Preferably, in said copolymer (P), each of said PFPE chain is a fully fluorinated chain [chain (R_{f})] comprising, preferably consists of, repeating units R°, said repeating units being independently selected from the group consisting of:
(i) -CFXO-, wherein X is -F or -CF₃;
(ii) -CFXCFXO-, wherein X, equal or different at each occurrence, is -F or - CF₃, with the proviso that at least one of X is -F;
(iii) -CF₂CF₂CF₂O-;
(iv) -CF₂CF₂CF₂CF₂O-;
(v) -(CF₂)ⱼ-CFZ-O- wherein j is an integer from 0 to 3 and Z is a group of general formula -O-R_{(f-a)}-T, wherein R_{(f-a)} is a fluoropolyoxyalkene chain comprising a number of repeating units from 0 to 10, said recurring units being chosen among the following : -CFXO- , -CF₂CFXO-, -CF₂CF₂CF₂O-, -CF₂CF₂CF₂CF₂O-, with each of X being independently -F or -CF₃ and T being a C₁-C₃ perfluoroalkyl alkyl chain.

Preferably, chain (R_{f}) complies with the following formula:

(R_{f}-I) -[(CFX¹O)_{g1}(CFX²CFX³O)_{g2}(CF₂CF₂CF₂O)_{g3}(CF₂CF₂CF₂CF₂O)_{g4}]-

wherein
- X¹ is independently selected from -F and -CF₃,
- X², X³, equal or different from each other and at each occurrence, are independently -F, -CF₃, with the proviso that at least one of X is -F;
- g1, g2 , g3, and g4, equal or different from each other, are independently integers ≥0, such that g1+g2+g3+g4 is in the range from 2 to 300, preferably from 2 to 100; should at least two of g1, g2, g3 and g4 be different from zero, the different recurring units are generally statistically distributed along the chain.

More preferably, chain (R_{f}) is selected from chains of formula:

(R_{f}-IIA) -[(CF₂CF₂O)ₐ₁(CF₂O)ₐ₂]-

wherein:
- a1 and a2 are independently integers ≥ 0 such that the number average molecular weight is between 400 and 100,000, preferably between 400 and 50,000; both a1 and a2 are preferably different from zero, with the ratio a1/a2 being preferably comprised between 0.1 and 10;

(R_{f}-IIB) -[(CF₂CF₂O)_{b1}(CF₂O)_{b2}(CF(CF₃)O)_{b3}(CF₂CF(CF₃)O)_{b} ]-

wherein:
b1, b2, b3, b4, are independently integers ≥ 0 such that the number average molecular weight is between 400 and 100,000, preferably between ₄400 and 50,000; preferably each of b1, b2, b3, b4 are > 0;

(R_{f}-IIC) -[(CF₂CF₂O)_{c1}(CF₂O)_{c2}(CF₂(CF₂)_{cw}CF₂O)_{c3}]-

wherein:
cw = 1 or 2;
c1, c2, and c3 are independently integers ≥ 0 chosen so that the number average molecular weight is between 400 and 100,000, preferably between 400 and 50,000; preferably c1, c2 and c3 are all > 0, with the ratio c3/(c1+c2) being generally lower than 0.2.

Still more preferably, chain (R_{f}) complies with formula (R_{f}-III) here below:

(R_{f}-III) -[(CF₂CF₂O)ₐ₁(CF₂O)ₐ₂]-

wherein:
- a1, and a2 are integers > 0 such that the number average molecular weight is between 400 and 100,000, preferably between 400 and 50,000, with the ratio a1/a2 being generally between 0.1 and 10, more preferably between 0.2 and 5.

Preferably, in formula (II), at least one of substituents R₁ to R₄ is a group of formula (III) and the other substituents are each independently selected from -F or a perfluorinated alkyl chain having from 1 to 3 carbon atoms, more preferably -F or a -CF₃.

Preferably, in said formula (III), b is 1.

Preferably, in said formula (III), said R₁₀ is a linear or branched perfluoroalkyl chain comprising from 1 to 9, more preferably from 1 to 6, carbon atoms and one or two oxygen atom(s).

Preferably, in formula (III), said R₁₀ complies with the following formula:

(R₁₀-i) -(CF₂)_{d}O-R_{CF}-

wherein
d is zero or 1 and
R_{CF} is a linear or branched perfluoroalkyl chain comprising from 1 to 3 carbon atoms or a linear or branched perfluoroalkyl chain comprising from 1 to 6 carbon atoms and at least one oxygen atom.

More preferably, said R_{CF} is a linear or branched perfluoroalkyl chain comprising from 1 to 5 carbon atoms, optionally interrupted by one oxygen atom.

Copolymers (P) according to the present invention can be advantageously prepared via the claimed process (P), which can be easily scaled up.

Before step (a), the PFPE peroxy can be subjected to partial reduction of the peroxid bonds, for example by chemical reduction or UV treatment or thermal treatment.

Preferably, said PFPE peroxy is a peroxidic perfluoropolyether polymer having two chain ends, each comprising a group selected from a linear or branched perfluorinated alkyl chain comprising from 1 to 6 carbon atoms or -C(=O)F, said two chain ends being bonded to opposite sides of a perfluoropolyether chain [chain (R_{f})] comprising, preferably consisting of, repeating units (R°) being independently selected from the group consisting of formulae (i) to (v) as above defined and having a peroxidic content (PO), defined as grams of active oxygen (Mw = 16) in 100 g of PFPE peroxy between 0.1 and 4, preferably between 0.1 and 3.5.

Preferably, in said PFPE peroxy, chain (R_{f}) complies with formulae (Rf-I), or (Rf-IIA), (Rf-IIB), (Rf-IIC) or (R_{f}-III) as defined above.

According to a particularly preferred embodiment, said at least one compound of formula (X-p) is selected from :

CF₂=CFCF₂OCF₂CF₂COOH

CF₂=CFOCF₂COOH

CF₂=CFO(CF₂)₅COOH

CF₂=CFOCF₂CF₂OCF₂COOH

CF₂=CFOCF₂CF₂COOH

CF₂=CFCF₂OCF₂CF₂COF

CF₂=CFOCF₂COF

CF₂=CFO(CF₂)₃OCF(CF₃)COF

CF₂=CFO(CF₂)₅COF

CF₂=CFOCF₂CF(CF₃)OCF₂CF₂CN

CF₂=CFOCF₂CN

CF₂=CFO(CF₂)₅CN

CF₂=CFO(CF₂)₃OCF(CF₃)CN

CF₂=CFCF₂OCF₂CF₂CN

CF₂=CFOCF₂CF₂Br

CF₂=CFCF₂OCF₂CF₂Br

CF₂=CFOCF₂CF(CF₃)OCF₂CF₂Br

CF₂=CFCF₂OCF₂CF₂CONH₂

CF₂=CFOCF₂CONH₂

CF₂=CFOCF₂CF₂CONH₂ .

In step (a), the amount of said compound (X-p) is not limited, it can advantageously be selected by the person skilled in the art on the basis of both the amount of the PFPE peroxy, as well as its peroxidic content, and the final polymer desired. For example, the equivalents of double bonds of said compound (X-p) to the equivalents of peroxidic groups can range from 1:100 to 5000:100. As will be understood by those skilled in the art, said compound (X-p) can be the solvent (i.e., in a very large excess) and separated by copolymer (P) of the invention at the end of the reaction, for example via distillation.

Step (a) of process (P) can be advantageously performed by contacting said PFPE peroxy with one compound of formula (X-p). According to this embodiment, group (B) in copolymer (P) will be one group of formula (II) as defined above.

Alternatively, said step (a) can be performed by contacting said PFPE peroxy with two or more compounds of formula (X-p). According to this embodiment, group (B) in copolymer (P) will be two or more groups each of formula (II) as defined above.

In other words, in this embodiment, said block (I) complies with formula (I-a):

-[A-(B1)ₙ₁-(B2)ₙ₂-(Bx)ₙₓ]z- (I-a)

wherein
each of z and A are as defined above,
B1 derives from a first compound (X-p), B2 derives from a second compound (X-P) and Bx derives from x^{th} compound (X-p), wherein B1, B2 and Bx are randomly disposed within block (I) and each of n1, n2 and nx is zero or an integer from 1 to 5, preferably 1 or 2, provided that at least two of n1, n2 and nx are different from zero.

Step (a) and step (b) can be performed in the presence of a fluorinated solvent. Preferably said fluorinated solvent is selected in the group comprising: perfluorocarbons, hydrofluorocarbons, perfluoropolyethers, hydrofluoro-polyethers.

Preferably, step (b) is performed in the presence of UV radiation for a time from 2 to 150 hours, more preferably from 5 to 100 hours.

Preferably, step (b) is performed in the presence of UV radiation at a temperature from -60°C to +150°C, more preferably from -20°C to +100°C and even more preferably from 0°C to 60°C.

As an alternative, step (b) can be performed under thermal treatment, preferably by heating at a temperature from 150 °C to 250 °C.

Preferably, said step (b) is performed in an inert atmosphere.

Advantageously, the functional groups introduced as pendant groups along the backbone of said copolymer (P), notably -COOH, -COF -CN, -Br and -CONH₂, as well as the functional groups at the chain ends of copolymer (P), notably -COF, can be properly reacted to obtain other different functional groups.

The expression "can be reacted" is intended to indicate that such functional groups can for example be salified, hydrolyzed or undergo a different chemical reaction to provide functional group(s) endowed with the desired reactivity, taking into consideration the final use of copolymer (P).

In another aspect, the present invention relates to a block copolymer [copolymer (P_{F})] comprising a first and a second perfluoropolyether chain [PFPE chain] each having two chain ends, wherein the first chain end of each one of said first and second PFPE chain is a chain end of copolymer (P_{F}) and each one comprises a group selected from: a perfluorinated linear or branched alkyl chain having from 1 to 6 carbon atoms; -COOH and salts thereof with an organic cation, preferably onium cation, more preferably ammonium, or an inorganic cation, preferably an alkaline metal, more preferably Na⁺, K⁺ ; -COOR wherein R is a linear or branched alkyl chain comprising from 1 to 6 carbon atoms, preferably from 1 to 3 carbon atoms, more preferably 1 carbon atoms; -COF; -CONH₂; - CON(R₁₀₀)(R₁₀₁) wherein each of R₁₀₀ and R₁₀₀ have the same meanings defined for R; -(R)_{c}OH with c being 0 or 1 and R being as defined above; - C(O)-O-C(O)R with R being as defined above;
with the proviso that (i) at least one chain end of said first and second PFPE chain comprises a group different from a perfluorinated linear or branched alkyl chain having from 1 to 6 carbon atoms and (ii) when one chain end comprises group -COF, the other chain end does not comprises a perfluorinated linear or branched alkyl chain having from 1 to 6 carbon atoms or -COF;
and the second chain ends of said first and second PFPE chain are
bonded to each other via a block of formula (I):

   (1) -[A_{F}-B_{F}]_{z}-
wherein
z is an integer from 1 to 100,
   (A) is a PFPE chain, and
   (B) is at least one group of formula (II): 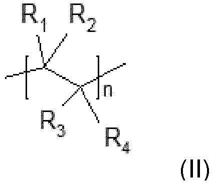
wherein
n is an integer from 1 to 5, preferably from 1 to 2;
R₁ to R₄, each independently, is selected in the group comprising, preferably consisting of, -F, perfluorinated linear or branched alkyl chain having from 1 to 6 carbon atoms, and group of formula (III):

   (III) -R₁₀-(X)_{b}
wherein
R₁₀ is a linear or branched perfluoroalkyl chain comprising from 1 to 12 carbon atoms, optionally containing one or more oxygen atoms,
X is a functional group selected from: -COOH and salts thereof with an organic cation, preferably onium cation, more preferably ammonium, or an inorganic cation, preferably an alkaline metal, more preferably Na⁺, K⁺; -COOR with R being as defined above; -COF; - CON(R₁₀₀)(R₁₀₁) wherein each of R₁₀₀ and R₁₀₀ are a hydrogen atom or have the same meanings defined for R; -(R)_{c}OH with c being 0 or 1 and R being as defined above; -C(O)-O-C(O)R with R being as defined above; -
Br; -CN; and
b is an integer equal to 1 or 2;
wherein
* in said formula (1), said (A) and (B) are statistically (randomly) disposed;
* in formula (II), at least one, preferably one, of R₁ to R₄ is group of formula (III); and
* the total number of said groups B in said copolymer (P_{F}) is from 1 to 100.

Advantageously, copolymer (P_{F}) according to the present invention is obtained from process (P) as described above, which further comprises after said step (b), at least one step (c) comprising salification, hydrolyzation, oxidation, reduction or another chemical reaction capable of providing functional group(s) of interest.

The present invention further encompasses copolymer (P_{F}) obtained at the end of step (c) of process (P).

In another aspect, the present invention relates to a mixture [mixture (P_{F})] comprising two or more copolymers (P_{F}) as defined above.

While process (P) according to the present invention can be controlled, and purification steps can be performed after step (b) or step (c) of process (P), mixtures of one or more copolymers (P) or copolymers (P_{F}) are typically obtained. Said mixtures can further contain the PFPE peroxy used as starting material and/or mixtures of copolymers (P) containing peroxy groups [copolymer (P_{O-O})] and/or mixtures of copolymers (PF) containing peroxy groups [copolymers (P_{F-O-O})] can be obtained.

In another aspect, the present invention related to a mixture [mixture (M1)] comprising at least one copolymer (P) as defined above, and at least one of said PFPE peroxy used as starting material and/or one or more of said copolymers (P_{O-O}).

In another aspect, the present invention relates to a mixture [mixture (M2)] comprising at least one copolymer (P_{F}) as defined above, and at least one of at least one of said copolymer (P) as defined above, said PFPE peroxy used as starting material, said one or more copolymers (P_{O-O}), and/or said one or more copolymers (P_{F-O-O}).

Advantageously, said copolymer (P_{O-O}) and/or said copolymer (P_{F-O-O}) can be isolated and used as intermediate in other processes.

While the amount of peroxy groups that can be present in the mixture containing copolymer (P) or copolymer (P_{F}) of the present invention can be up to 99% based on the amount of the starting peroxy groups in the PFPE peroxy, depending on the final application the amount of said peroxy groups can be properly adjusted for example up to 95, 90, 85, 80, 75, 70, 65, 60, 55, 50, 45, 40, 35, 30, 25, 20, 15, 10, 5%.

More preferably, the amount of said peroxy groups is up to 1, even more preferably up to 0.5 % and still more preferably up to 0.1%.

In another aspect, the present invention relates to a block copolymer [copolymer (P_{O-O})] comprising a first and a second perfluoropolyether chain [PFPE chain] complying with formula A or (Rf_{O-O}), wherein A is as defined above and (Rf_{O-O}) is a repeating units complying with any one of formulae (i) to (v) as defined above for (R°) and having a peroxidic content (PO), defined as grams of active oxygen (Mw = 16) in 100 g of PFPE peroxy between 0.1 and 4, preferably between 0.1 and 3.5, each of said first and second PFPE chain having two chain ends, wherein the first chain end of each one of said first and second PFPE chain is a chain end of copolymer (P) and each one comprises a group selected from: a perfluorinated linear or branched alkyl chain having from 1 to 6 carbon atoms; -COOH and salts thereof with an organic cation, preferably onium cation, more preferably ammonium, or an inorganic cation, preferably an alkaline metal, more preferably Na⁺, K⁺ ; -COOR wherein R is a linear or branched alkyl chain comprising from 1 to 6 carbon atoms, preferably from 1 to 3 carbon atoms, more preferably 1 carbon atoms; -COF; -CONH₂; - CON(R₁₀₀)(R₁₀₁) wherein each of R₁₀₀ and R₁₀₀ have the same meanings defined for R; -(R)_{c}OH with c being 0 or 1 and R being as defined above; - C(O)-O-C(O)R with R being as defined above;
and the second chain ends of said first and second PFPE chain are bonded to each other via a block of formula (I_{O-O}):

   (I_{O-O}) -[A-B-(Rf_{O-O})]_{z}-
wherein z, A, B and (Rf_{O-O}) are as defined above,
wherein
* in formula (I_{O-O}), A, B and (Rf_{O-O}) are statistically (randomly) disposed and
* the total number of said groups B in said copolymer (P_{O-O}) is from 1 to 100.

In a still another embodiment, the present invention relates to a block copolymer [copolymer (P_{F-O-O})] comprising a first and a second perfluoropolyether chain [PFPE chain] complying with formula A or (Rf_{O-O}), wherein A is as defined above and (Rf_{O-O}) is a repeating units complying with any one of formulae (i) to (v) as defined above for (R°) and having a peroxidic content (PO), defined as grams of active oxygen (Mw = 16) in 100 g of PFPE peroxy between 0.1 and 4, preferably between 0.1 and 3.5, each of said first and second PFPE chain having two chain ends, wherein the first chain end of each one of said first and second PFPE chain is a chain end of copolymer (P_{F-O-O}) and each one comprises a group selected from: a perfluorinated linear or branched alkyl chain having from 1 to 6 carbon atoms; -COOH and salts thereof with an organic cation, preferably onium cation, more preferably ammonium, or an inorganic cation, preferably an alkaline metal, more preferably Na⁺, K⁺ ; -COOR wherein R is a linear or branched alkyl chain comprising from 1 to 6 carbon atoms, preferably from 1 to 3 carbon atoms, more preferably 1 carbon atoms; - COF; -CONH₂; -CON(R₁₀₀)(R₁₀₁) wherein each of R₁₀₀ and R₁₀₀ have the same meanings defined for R; -(R)_{c}OH with c being 0 or 1 and R being as defined above; -C(O)-O-C(O)R with R being as defined above;
with the proviso that (i) at least one chain end of said first and second PFPE chain comprises a group different from a perfluorinated linear or branched alkyl chain having from 1 to 6 carbon atoms and (ii) when one chain end comprises group -COF, the other chain end does not comprises a perfluorinated linear or branched alkyl chain having from 1 to 6 carbon atoms or -COF;
and the second chain ends of said first and second PFPE chain are bonded to each other via a block of formula (I_{O-O}):

   (I_{O-O}) -[A-B-(Rf_{O-O})]_{z}-
wherein z, A, B and (Rf_{O-O}) are as defined above,
wherein
* in formula (I_{O-O}), A, B and (Rf_{O-O}) are statistically (randomly) disposed and
* the total number of said groups B in said copolymer (P_{F-O-O}) is from 1 to 100.

Should the disclosure of any patents, patent applications, and publications which are incorporated herein by reference conflict with the description of the present application to the extent that it may render a term unclear, the present description shall take precedence.

The invention will be now described in connection with the following examples, whose purpose is merely illustrative and not intended to limit the scope of the invention.

### Experimental section

### Materials

Peroxidic perfluoropolyether oils were obtained by Solvay Specialty Polymers Italy S.p.A., complying with formula

XO-(CF₂CF₂O)ₘ(CF₂O)ₙ(O)ₕ-X'

wherein
X and X' were -CF₃, -CF₂COF, -COF and having the following properties:
PFPE peroxy (1) Mn = 40 900 g/mol; P.O.= 1.45%; m/n = 1.1
PFPE peroxy (2) Mn = 37 800g/mol; P.O.= 1.47%; m/n = 1.1
PFPE peroxy (3) Mn = 25 000 g/mol; P.O.= 1.34%; m/n=1.1
PFPE peroxy (4) Mn = 39 000 g/mol; P.O.= 1.54%; m/n= 1.0
PFPE peroxy (5) Mn = 46 000 g/mol; P.O.= 1.61%; m/n=1.0
PFPE peroxy (6) Mn = 47 000 g/mol; P.O.= 1.61%; m/n=1.0
PFPE peroxy (7) Mn = 37 000 g/mol; P.O.= 1.53%; m/n=1.0

The following were purchased by Anles LTD and used as such:
perfluoroallyl acid (PFAA) CF₂=CFCF₂OCF₂CF₂COOH
perfluoroallyl acyl fluoride (PFAAF) CF₂=CFCF₂OCF₂CF₂COF
perfluorovinyl cyano (8-CNVE) CF₂=CFOCF₂CF(CF₃)OCF₂CF₂CN

Perfluorinated solvents Galden SV70, Galden HT200 and Galden D100 were obtained by Solvay Specialty Polymers Italy S.p.A..

### Methods:

¹⁹F-NMR-Varian Mercury 200 MHz spectrometer working for the ¹⁹F nucleus was used to obtain the structure, molecular weight, chain end composition of the perfluoropolyether oils. The ¹⁹F-NMR spectrum was obtained on pure samples using CFCl₃ as internal reference.

The peroxidic content (PO) was expressed as grams of peroxidic oxygen per 100 g of polymer. The analysis of the peroxide content was carried out by iodometric titration using a Mettler DL40 device equipped with platinum electrode. The sensitivity limit for the PO determination was 0.0002%.

### Example 1 - Preparation of poly-carboxylic perfluoropolyether by thermal route

150 g of peroxidic perfluoropolyether oil [PFPE (1)], 3.4 g of PFAA and 100 g of Galden^{®} HT200 were introduced in a flask equipped with a magnetic stirrer and a thermometer. The mixture was heated at 80°C to homogenize and then the temperature was progressively increased from 160°C to 230°C in a N₂ atmosphere for 14 hours. At the end, the product was maintained at 240°C in vacuum for 1 hour. ¹⁹F-NMR analysis of the product confirmed the complete removal of peroxide units and unreacted olefin. The structure found was:

X-O-(CF₂CF₂O)ₘ(CF₂O)ₙ[CF2CF(CF₂OCF₂CF₂COOH)]ₐ-X'

with m/n = 1.1,
a = 3.3 as average,
X and X' = -CF₃, -CF₂COF and
number average molecular weight (Mn) = 43 300 g/mol.

### Example 2 - Preparation of poly cyano perfluoropolyether by photochemical route

A 800mL cylindrical photochemical reactor was equipped with a high pressure mercury lamp model HANAU TQ150. The reactor was equipped with a thermocouple and a condenser.

250 g of peroxidic perfluoropolyether oil [PFPE (2)] were charged with 680 g of Galden^{®} SV70 and 8.6 g of 8-CNVE and were stirred to have an homogenous mixture. The UV lamp was switched on. The reactor was kept at about 10°C with an ice/water mixture during the reaction time. The reaction was conducted in N₂ inert atmosphere. After 96 hours, the lamp was switched off and the reaction mixture was recovered. Then, the solvent was distilled at 70°C under vacuum. ¹⁹F-NMR analysis of the product confirmed the complete removal of peroxide units and the structure:

XO-(CF₂CF₂O)ₘ(CF₂O)ₙ (CF₂CFO(CF₂CF(CF₃)OCF₂CF₂CN))ₐ-X'

where m/n = 1.1,
a = 2.5 as average,
X and X'= -CF₃ , -CF₂COF and
number average molecular weight (Mn) = 39 500 g/mol.

The introduction of the -CN functional groups was also confirmed by FT-IR spectroscopy measurements, confirming the presence of the peak at 2269 cm⁻¹.

### Example 3 - Preparation of poly-carboxylic perfluoropolyether by photochemical route

A 1000 mL cylindrical photochemical reactor was equipped with a high pressure mercury lamp model HANAU TQ150. The reactor was equipped with a thermocouple and a condenser.

780 g of peroxidic perfluoropolyether oil [PFPE (3)] were charged in the reactor with 776 g of PFAA and the mixture was stirred to homogenize. The reaction was conducted in N₂ atmosphere. The UV lamp was switched on. The reactor was kept at about 20°C with an ice/water mixture during the reaction time.

After 36 hours, the lamp was switched off and the reaction mixture was transferred in a flask equipped with a magnetic stirrer and thermometer. The residual PO and the unreacted olefin were removed by heating the mixture from 160 to 240°C over 11 hours.

¹⁹F-NMR analysis of the product confirmed the complete removal of peroxide units and unreacted olefin.

The acyl fluoride end groups were converted to the corresponding carboxylic acids by hydrolysis, according to the following procedure.

The product was dissolved in 820 g of Galden^{®} SV70 and 300 g of 20% HCl in water were added. The mixture was heated at 80°C for 2 h and then the two phases separated at room temperature. The fluorinated phase was washed twice with 300 mL of HCl 20% and then distilled at 120°C under vacuum to remove water and HCl traces. The final product (794g) was analyzed with ¹⁹F-NMR, which confirms that all the acyl fluoride groups were converted into corresponding carboxylic acid groups.

¹⁹F-NMR analysis confirmed the desired structure:

X-O-(CF₂CF₂O)ₘ(CF₂O)ₙ[CF₂CF(CF₂OCF₂CF₂COOH)]ₐ-X'

where
m/n = 1.1,
a = 18 as average,
X and X' = -CF₃, -CF₂COOH.

### Example 4 - Preparation of poly carboxylic perfluoropolyether with low equivalent weight by thermal route

750 g of peroxidic perfluoropolyether oil [PFPE (4)] and 750 g of PFAA were introduced in a flask equipped with a magnetic stirrer and thermometer. The mixture was heated at 80°C to homogenize and then the temperature was increased from 160°C to 220°C over 25 hours. At the end, the product was maintained at 220°C in vacuum for 1 hour.

The acyl fluoride groups were converted to the corresponding carboxylic acids by hydrolysis with water.

The product was stirred with 300 g of distilled water at room temperature for 4 hours. The fluorinated product was separated from the water phase and washed twice with fresh water. The final product was recovered after drying at 150°C in vacuum apparatus. The final product was analyzed with ¹⁹F-NMR, which confirmed that all the acyl fluoride groups were converted into corresponding carboxylic acid groups and that all the peroxide bonds were successfully removed.

The structure was:

XO-(CF₂CF₂O)ₘ(CF₂O)ₙ[CF₂CF(CF₂OCF₂CF₂COOH)]a-X'

where m/n = 1.0,
a = 24 as average,
X and X' = -CF₃, -CF₂COOH.

### Example 5 - Preparation of poly acyl fluoride perfluoropolyether by photochemical route

A 800mL cylindrical photochemical reactor was equipped with a high pressure mercury lamp model HANAU TQ150. The reactor was equipped with a thermocouple and a condenser.

Under N₂ inert atmosphere, 207 g of the peroxidic perfluoropolyether oil [PFPE (5)] were charged in the reactor with 554 g of Galden^{®} D100 as solvent and 199 g of PFAAF. The mixture was well stirred to homogenize. The UV lamp was switched on. The reactor was kept at about 20°C with an ice/water mixture during the reaction time.

After 25 hours, the lamp was switched off and the reaction mixture was recovered under dry N₂ atmosphere in a flask equipped with a magnetic stirrer and a thermometer. The residual PO and the unreacted olefin were removed by heating the flask from 130°C to 230°C. At the end, the last traces of PO were removed at 230°C under vacuum.

¹⁹F-NMR analysis confirmed the complete removal of peroxide units and unreacted olefin and the structure:

XO-(CF₂CF₂O)ₘ(CF₂O)ₙ[CF₂CF(CF₂OCF₂CF₂COF)]ₐ-X'

where m/n=1.0,
a = 33 as average,
X and X' = -CF₃, -CF₂COF and
number average molecular weight (Mn) = 40 200 g/mol.

### Example 6 - Preparation of poly cyano perfluoropolyether by photochemical route

A 1000 mL cylindrical photochemical reactor was equipped with a high pressure mercury lamp model HANAU TQ150. The reactor was equipped with a thermocouple and a condenser.

352 g of that peroxidic perfluoropolyether oil [PFPE (6)] were charged with 1180 g of Galden^{®} D100 and 212.8 g of 8-CNVE and were stirred to have an homogenous mixture. The UV lamp was switched on. The reactor was kept at about 20°C with an ice/water mixture during the reaction time. The reaction was conducted in N₂ inert atmosphere

After 56 hours, the lamp was switched off and the reaction mixture was recovered. The mixture was introduced in a flask and the solvent and the unreacted olefin were distilled at 120°C under vacuum.

¹⁹F-NMR analysis of the product confirmed the complete removal of peroxide units and unreacted olefin and the structure:

XO-(CF₂CF₂O)ₘ(CF₂O)ₙ[CF₂CFOCF₂CF(CF₃)OCF₂CF₂CN)]a-X'

where
m/n = 1.0,
a = 52 as average,
X and X' = -CF₃, -CF₂COF and
number average molecular weight (Mn) = 56 400 g/mol.

The introduction of -CN functional groups was also confirmed by FT-IR spectroscopy measurements by confirming the presence of the peak at 2269 (sharp) cm⁻¹.

### Example 7 - Preparation of poly-carboxylic perfluoropolyether by photochemical route

250 g of peroxidic perfluoropolyether oil [PFPE (7)] were charged in the reactor with 680 g of Galden^{®} SV70 and 5.7 g of PFAA and the mixture was stirred to homogenize. The reaction is conducted in N₂ inert atmosphere. The UV lamp was switched on. The reactor was kept at about 10°C with an ice/water mixture during the reaction time.

After 6 hours, the lamp was switched off and the reaction mixture was recovered. The product was introduced in a flask equipped with a magnetic stirrer and submitted to distillation to remove the solvent. After that, the temperature was raised to 240°C and maintained for 5 hours. The ¹⁹F-NMR of the product confirmed the complete removal of peroxide units.

The acyl fluoride groups were converted to the corresponding carboxylic acids by hydrolysis with water; the product was stirred with 300 g of distilled water at room temperature for 4 hours. The final mass was separated from the water phase and washed twice with fresh water. The final product was recovered after drying at 150°C in vacuum. The final product was analyzed with ¹⁹F-NMR, which confirms that all the acyl fluoride groups were converted into corresponding carboxylic acid groups.

The structure found was

XO-(CF₂CF₂O)ₘ(CF₂O)ₙ(CF₂CF(CF₂OCF₂CF₂COOH))ₐ-X',

with Mn = 40 400 g/mol
m/n = was 1.0 and
a = 3.5 as average value
X and X' = -CF₃, -CF₂COOH.

## Claims

1. A block copolymer [copolymer (P)] comprising a first and a second perfluoropolyether chain [PFPE chain] each having two chain ends, wherein the first chain end of each one of said first and second PFPE chain is a chain end of copolymer (P) and each one comprises a group selected from a perfluorinated linear or branched alkyl chain comprising from 1 to 6 carbon atoms and -C(=O)F, and the second chain ends of said first and second PFPE chain are bonded to each other via a block of formula (I):
(I) -[A-B]_{z}-
wherein
z is an integer from 1 to 100,
(A) is a PFPE chain, and
(B) is at least one group of formula (II): 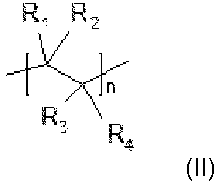
wherein
n is an integer from 1 to 5, preferably from 1 to 2;
R₁ to R₄, each independently, is selected in the group comprising, preferably consisting of, -F, perfluorinated linear or branched alkyl chain having from 1 to 6 carbon atoms, and group of formula (III):
(III) -R₁₀-(X)_{b}
wherein
R₁₀ is a linear or branched perfluoroalkyl chain comprising from 1 to 12 carbon atoms, preferably containing at least one oxygen atom,
X is a functional group selected from: -COOH, -COF, -CN, -Br and -CONH₂; and
b is an integer equal to 1 or 2;
wherein
* in said formula (1), said (A) and (B) are statistically (randomly) disposed;
* in formula (II), at least one, preferably one, of R₁ to R₄ is group of formula (III); and
* the total number of said groups B in said copolymer (P) is from 1 to 100.

2. The copolymer (P) according to Claim 1, wherein at least one, preferably one, of the two chain ends comprises a group -C(=O)F and the other chain end comprises a perfluorinated alkyl chain comprising from 1 to 3 carbon atoms.

3. The copolymer (P) according to Claim 1 or 2, wherein
- said at least one block (A) is bonded to one chain end and/or to said at least one block (B) via a sigma bond or a group -(C)- selected from -CF₂-, -CF₂CF₂- or -O-; and/or
- said at least one block (B) is bonded to one chain end and/or to said at least one block (A) via a sigma bond or a group -(C)- selected from -CF₂-, -CF₂CF₂- or -O-.

4. The copolymer (P) according to any one of the preceding Claims, wherein each of said PFPE chain is a fully fluorinated chain [chain (R_{f})] comprising repeating units R°, said repeating units being independently selected from the group consisting of:
(i) -CFXO-, wherein X is -F or -CF₃;
(ii) -CFXCFXO-, wherein X, equal or different at each occurrence, is -F or - CF₃, with the proviso that at least one of X is -F;
(iii) -CF₂CF₂CF₂O-;
(iv) -CF₂CF₂CF₂CF₂O-;
(v) -(CF₂)ⱼ-CFZ-O- wherein j is an integer from 0 to 3 and Z is a group of general formula -O-R_{(f-a)}-T, wherein R_{(f-a)} is a fluoropolyoxyalkene chain comprising a number of repeating units from 0 to 10, said recurring units being chosen among the following : -CFXO- , -CF₂CFXO-, -CF₂CF₂CF₂O-, - CF₂CF₂CF₂CF₂O-, with each of X being independently -F or -CF₃ and T being a C₁-C₃ perfluoroalkyl alkyl chain.

5. The copolymer (P) according to any one of the preceding Claims, wherein:
- in formula (II), at least one of substituents R₁ to R₄ is a group of formula (III) and the other substituents are each independently selected from -F or a perfluorinated alkyl chain having from 1 to 3 carbon atoms; and/or
- in said formula (III), b is 1; and/or
- in said formula (III), said R₁₀ is a linear or branched perfluoroalkyl chain
comprising 1 to 9 carbon atoms and one or two oxygen atom(s).

6. The copolymer (P) according to Claim 5, wherein said R₁₀ complies with the following formula:
(R₁₀-i) -(CF₂)_{d}O-R_{CF}-
wherein
d is zero or 1 and
R_{CF} is a linear or branched perfluoroalkyl chain comprising 1 to 3 carbon atoms or a linear or branched perfluoroalkyl chain comprising 1 to 6 carbon atoms and at least one oxygen atom.

7. The copolymer (P) according to any one of the preceding claims, wherein block (I) complies with formula (I-a):
-[A-(B1)ₙ₁-(B2)ₙ₂-(Bx)ₙₓ]z- (I-a)
wherein
each of z and A are as defined in Claim 1,
each of B1, B2 and Bx is at least one group of formula (II) as defined in Claim 1, and
wherein
* B1, B2 and Bx are randomly disposed within block (I) and
* each of n1, n2 and nx is zero or an integer from 1 to 5, provided that at least two of n1, n2 and nx are different from zero.

8. A mixture [mixture (P)] comprising two or more copolymers (P) as defined in any one of Claims 1 to 7.

9. A process [process (P)] for the manufacture of copolymer (P) as defined in any one of Claims 1 to 7 or of mixture (P) as defined in Claim 8, said process comprising
(a) contacting:
- at least one perfluoropolyether polymer comprising peroxidic groups [PFPE peroxy];
- at least one perfluorinated compound of formula (X-p): 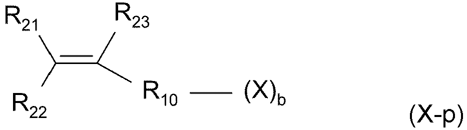 wherein
each of R₂₁ to R₂₃ is independently-F or perfluorinated linear or branched alkyl chain having from 1 to 6 carbon atoms,
R₁₀, X and b are as defined in Claim 1;
(b) letting said PFPE peroxy and said compound of formula (X-p) react in the presence of UV radiation or under heating;
preferably wherein:
- said PFPE peroxy is a peroxidic perfluoropolyether polymer having two chain ends, each comprising a group selected from a linear or branched perfluorinated alkyl chain comprising from 1 to 6 carbon atoms or -C(=O)F, said two chain ends being bonded to opposite sides of a perfluoropolyether chain [chain (R_{f})] comprising repeating units (R°) being independently selected from the group consisting of formulae (i) to (v) as defined in Claim 4 and having a peroxidic content (PO), defined as grams of active oxygen (Mw = 16) in 100 g of PFPE peroxy between 0.1 and 4;
and/or
- said at least one compound of formula (X-p) is selected from :
CF₂=CFCF₂OCF₂CF₂COOH
CF₂=CFOCF₂COOH
CF₂=CFO(CF₂)₅COOH
CF₂=CFOCF₂CF₂OCF₂COOH
CF₂=CFOCF₂CF₂COOH
CF₂=CFCF₂OCF₂CF₂COF
CF₂=CFOCF₂COF
CF₂=CFO(CF₂)₃OCF(CF₃)COF
CF₂=CFO(CF₂)₅COF
CF₂=CFOCF₂CF(CF₃)OCF₂CF₂CN
CF₂=CFOCF₂CN
CF₂=CFO(CF₂)₅CN
CF₂=CFO(CF₂)₃OCF(CF₃)CN
CF₂=CFCF₂OCF₂CF₂CN
CF₂=CFOCF₂CF₂Br
CF₂=CFCF₂OCF₂CF₂Br
CF₂=CFOCF₂CF(CF₃)OCF₂CF₂Br
CF₂=CFCF₂OCF₂CF₂CONH₂
CF₂=CFOCF₂CONH₂
CF₂=CFOCF₂CF₂CONH₂ .

10. A block copolymer [copolymer (P_{F}11. comprising a first and a second perfluoropolyether chain [PFPE chain] each having two chain ends, wherein the first chain end of each one of said first and second PFPE chain is a chain end of copolymer (P_{F}) and each one comprises a group selected from: a perfluorinated linear or branched alkyl chain having from 1 to 6 carbon atoms; -COOH and salts thereof with an organic cation or an inorganic cation; -COOR wherein R is a linear or branched alkyl chain comprising from 1 to 6 carbon atoms; -COF; -CONH₂; -CON(R₁₀₀)(R₁₀₁) wherein each of R₁₀₀ and R₁₀₀ have the same meanings defined for R; -(R)_{c}OH with c being 0 or 1 and R being as defined above; -C(O)-O-C(O)R with R being as defined above;
with the proviso that (i) at least one chain end of said first and second PFPE chain comprises a group different from a perfluorinated linear or branched alkyl chain having from 1 to 6 carbon atoms and (ii) when one chain end comprises group -COF, the other chain end does not comprise a perfluorinated linear or branched alkyl chain having from 1 to 6 carbon atoms or -COF;
and the second chain ends of said first and second PFPE chain are bonded to each other via a block of formula (I):
(1) -[A-B]_{z}-
wherein
z is an integer from 1 to 100,
(A) is a PFPE chain, and
(B) is at least one group of formula (II): 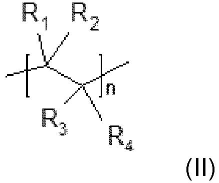
wherein
n is an integer from 1 to 5;
R₁ to R₄, each independently, is selected in the group comprising -F, perfluorinated linear or branched alkyl chain having from 1 to 6 carbon atoms, and group of formula (III):
(III) -R₁₀-(X)_{b}
wherein
R₁₀ is a linear or branched perfluoroalkyl chain comprising from 1 to 12 carbon atoms, optionally containing one or more oxygen atoms,
X is a functional group selected from: -COOH and salts thereof with an organic cation or an inorganic cation; -COOR with R being a linear or branched alkyl chain comprising from 1 to 6 carbon atoms; -COF; -CON(R₁₀₀)(R₁₀₁) wherein each of R₁₀₀ and R₁₀₀ are a hydrogen atom or have the same meanings defined for R; -(R)_{c}OH with c being 0 or 1 and R being a linear or branched alkyl chain comprising from 1 to 6 carbon atoms; -C(O)-O-C(O)R with R being a linear or branched alkyl chain comprising from 1 to 6 carbon atoms; -Br; - CN; and
b is an integer equal to 1 or 2;
wherein
* in said formula (1), said (A) and (B) are statistically (randomly) disposed;
* in formula (II), at least one, preferably one, of R₁ to R₄ is group of formula (III); and
* the total number of said groups B in said copolymer (P_{F}) is from 1 to 100.

11. A mixture [mixture (P_{F}12. comprising two or more copolymers (P_{F}13. as defined in Claim 10.

12. A block copolymer [copolymer (Po-o)] comprising a first and a second perfluoropolyether chain [PFPE chain] complying with formula A or (Rfo-o), wherein A is as defined above and (Rfo-o) is a repeating unit complying with any one of formulae (i) to (v) as defined above for (R°) and having a peroxidic content (PO), defined as grams of active oxygen (Mw = 16) in 100 g of PFPE peroxy between 0.1 and 4, each of said first and second PFPE chain having two chain ends, wherein the first chain end of each one of said first and second PFPE chain is a chain end of copolymer (P) and each one comprises a group selected from: a perfluorinated linear or branched alkyl chain having from 1 to 6 carbon atoms; -COOH and salts thereof with an organic cation or an inorganic cation; -COOR wherein R is a linear or branched alkyl chain comprising from 1 to 6 carbon atoms; -COF; -CONH₂; - CON(R₁₀₀)(R₁₀₁) wherein each of R₁₀₀ and R₁₀₀ have the same meanings defined for R; -(R)_{c}OH with c being 0 or 1 and R being as defined above; - C(O)-O-C(O)R with R being as defined above;
and the second chain ends of said first and second PFPE chain are bonded to each other via a block of formula (I_{O-O}):
(I_{O-O}) -[A-B-(Rf_{O-O})]_{z}-
wherein
z, A, B are as defined in Claim 1 and
(Rfo-o) is as defined above,
wherein
* in formula (I_{O-O}), A, B and (Rfo-o) are statistically (randomly) disposed and
* the total number of said groups B in said copolymer (Po-o) is from 1 to 100.

13. A mixture [mixture (M1)] comprising at least one copolymer (P) as defined in Claims 1 to 7, and at least one of said PFPE peroxy as defined in Claim 9 and/or one or more of said copolymer (Po-o) as defined in Claim 12.

14. A block copolymer [copolymer (P_{F-O-O}18. comprising a first and a second perfluoropolyether chain [PFPE chain] complying with formula A or (Rfo-o), wherein A is as defined in Claim 1 and (Rfo-o) is a repeating unit complying with any one of formulae (i) to (v) as defined in Claim 4 and having a peroxidic content (PO), defined as grams of active oxygen (Mw = 16) in 100 g of PFPE peroxy between 0.1 and 4, each of said first and second PFPE chain having two chain ends, wherein the first chain end of each one of said first and second PFPE chain is a chain end of copolymer (P_{F-O-O}) and each one comprises a group selected from: a perfluorinated linear or branched alkyl chain having from 1 to 6 carbon atoms; -COOH and salts thereof with an organic cation or an inorganic cation; -COOR wherein R is a linear or branched alkyl chain comprising from 1 to 6 carbon atoms; -COF; -CONH₂; - CON(R₁₀₀)(R₁₀₁) wherein each of R₁₀₀ and R₁₀₀ have the same meanings defined for R; -(R)_{c}OH with c being 0 or 1 and R being as defined above; - C(O)-O-C(O)R with R being as defined above;
with the proviso that (i) at least one chain end of said first and second PFPE chain comprises a group different from a perfluorinated linear or branched alkyl chain having from 1 to 6 carbon atoms and (ii) when one chain end comprises group -COF, the other chain end does not comprise a perfluorinated linear or branched alkyl chain having from 1 to 6 carbon atoms or -COF;
and the second chain ends of said first and second PFPE chain are bonded to each other via a block of formula (I_{O-O}):
(I_{O-O}) -[A-B-(Rf_{O-O})]_{z}-
z, A, B are as defined in Claim 1 and
(Rfo-o) is as defined above,
wherein
* in formula (I_{O-O}), A, B and (Rfo-o) are statistically (randomly) disposed and
* the total number of said groups B in said copolymer (P_{F-O-O}) is from 1 to 100.

15. A mixture [mixture (M2)] comprising at least one copolymer (P_{F} as defined in Claim 10, and at least one of said copolymer (P) as defined in Claims 1 to 7, said PFPE peroxy as defined in Claim 10, said one or more copolymer (Po-o) as defined in Claim 12, and/or said one or more copolymers (P_{F-O-O}) as defined in Claim 14.

## Patentansprüche

1. Blockcopolymer [Copolymer (P)], umfassend eine erste und eine zweite Perfluorpolyetherkette [PFPE-Kette] mit jeweils zwei Kettenenden, wobei das erste Kettenende jeder der ersten und zweiten PFPE-Kette ein Kettenende von Copolymer (P) ist und jeweils eine Gruppe umfasst, die aus einer perfluorierten linearen oder verzweigten Alkylkette mit 1 bis 6 Kohlenstoffatomen und -C(=O)F ausgewählt ist, und die zweiten Kettenenden der ersten und zweiten PFPE-Kette über einen Block der Formel (I) aneinander gebunden sind:
(I) -[A-B]_{z}-
wobei
z für eine ganze Zahl von 1 bis 100 steht,
(A) für eine PFPE-Kette steht und
(B) für mindestens eine Gruppe der Formel (II) steht: 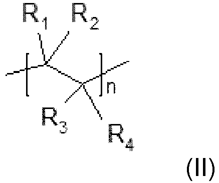
wobei
n für eine ganze Zahl von 1 bis 5, vorzugsweise von 1 bis 2, steht;
R₁ bis R₄ jeweils unabhängig ausgewählt ist aus der Gruppe, die Folgendes umfasst und vorzugsweise daraus besteht: -F, perfluorierte lineare oder verzweigte Alkylkette mit 1 bis 6 Kohlenstoffatomen und Gruppe der Formel (III):
(III) -R₁₀-(X)_{b}
wobei
R₁₀ für eine lineare oder verzweigte Perfluoralkylkette mit 1 bis 12 Kohlenstoffatomen, die vorzugsweise mindestens ein Sauerstoffatom enthält, steht,
X für eine funktionelle Gruppe steht, die ausgewählt ist aus: -COOH, -COF, -CN, -Br und -CONH₂; und
b für eine ganze Zahl gleich 1 oder 2 steht;
wobei
* in der Formel (I) die (A) und (B) statistisch (zufällig) angeordnet sind;
* in Formel (II) mindestens eines, vorzugsweise eines, von R₁ bis R₄ für eine Gruppe der Formel (III) steht; und * die Gesamtzahl der Gruppen B in dem Copolymer (P) 1 bis 100 beträgt.

2. Copolymer (P) nach Anspruch 1, wobei mindestens eines, vorzugsweise eines, der beiden Kettenenden eine Gruppe -C(=O)F umfasst und das andere Kettenende eine perfluorierte Alkylkette mit 1 bis 3 Kohlenstoffatomen umfasst.

3. Copolymer (P) nach Anspruch 1 oder 2, wobei
- der mindestens eine Block (A) über eine Sigma-Bindung oder eine Gruppe -(C)-, die aus -CF₂-, -CF₂CF₂- oder -O-ausgewählt ist, an ein Kettenende und/oder an den mindestens einen Block (B) gebunden ist; und/oder
- der mindestens eine Block (B) über eine Sigma-Bindung oder eine Gruppe -(C)-, die aus -CF₂-, -CF₂CF₂- oder -O-ausgewählt ist, an ein Kettenende und/oder an den mindestens einen Block (A) gebunden ist.

4. Copolymer (P) nach einem der vorhergehenden Ansprüche, wobei jede der PFPE-Ketten eine vollfluorierte Kette [Kette (R_{f})] ist, die Wiederholungseinheiten R° umfasst, wobei die Wiederholungseinheiten unabhängig aus der Gruppe ausgewählt sind, die aus Folgendem besteht:
(i) -CFXO-, wobei X für -F oder -CF₃ steht;
(ii) -CFXCFXO-, wobei X bei jedem Auftreten gleich oder verschieden ist und für -F oder -CF₃ steht, mit der Maßgabe, dass mindestens eines von X für -F steht;
(iii) -CF₂CF₂CF₂O-;
(iv) -CF₂CF₂CF₂CF₂O-;
(v) -(CF₂)ⱼ-CFZ-O-, wobei j für eine ganze Zahl von 0 bis 3 steht und Z für eine Gruppe der allgemeinen Formel -O-R_{(f-a)}-T steht, wobei R_{(f-a)} für eine Fluorpolyoxyalkenkette mit einer Zahl von wiederkehrenden Einheiten von 0 bis 10 steht, wobei die wiederkehrenden Einheiten aus den Folgenden ausgewählt sind: -CFXO-, -CF₂CFXO-, -CF₂CF₂CF₂O-, -CF₂CF₂CF₂CF₂O-, wobei X jeweils unabhängig für -F oder -CF₃ steht und T für eine C₁-C₃-Perfluoralkyl-Alkylkette steht.

5. Copolymer (P) nach einem der vorhergehenden Ansprüche, wobei:
- in Formel (II) mindestens einer der Substituenten R₁ bis R₄ für eine Gruppe der Formel (III) steht und die anderen Substituenten jeweils unabhängig aus -F oder einer perfluorierten Alkylkette mit 1 bis 3 Kohlenstoffatomen ausgewählt sind; und/oder
- in der Formel (III) b für 1 steht; und/oder
- in der Formel (III) R₁₀ für eine lineare oder verzweigte Perfluoralkylkette mit 1 bis 9 Kohlenstoffatomen und einem oder zwei Sauerstoffatomen steht.

6. Copolymer (P) nach Anspruch 5, wobei das R₁₀ der folgenden Formel entspricht:
(R₁₀-i) - (CF₂)_{d}O-R_{CF}-
wobei
d für null oder 1 steht und
R_{CF} für eine lineare oder verzweigte Perfluoralkylkette mit 1 bis 3 Kohlenstoffatomen oder eine lineare oder verzweigte Perfluoralkylkette mit 1 bis 6 Kohlenstoffatomen und mindestens einem Sauerstoffatom steht.

7. Copolymer (P) nach einem der vorhergehenden Ansprüche, wobei Block (I) der Formel (I-a) entspricht:
-[A-(B₁)ₙ₁-(B2)ₙ₂-(Bx)ₙₓ]z- (I-a)
wobei
z und A jeweils wie in Anspruch 1 definiert sind,
B1, B2 und Bx jeweils für mindestens eine Gruppe der Formel (II) gemäß Anspruch 1 stehen und
wobei
* B1, B2 und Bx sind in Block (I) zufällig angeordnet sind und
* n1, n2 und nx jeweils für null oder eine ganze Zahl von 1 bis 5 stehen, vorausgesetzt, dass mindestens zwei von n1, n2 und nx von null verschieden sind.

8. Mischung [Mischung (P)], umfassend zwei oder mehr Copolymere (P) gemäß einem der Ansprüche 1 bis 7.

9. Verfahren [Verfahren (P)] zur Herstellung von Copolymer (P) gemäß einem der Ansprüche 1 bis 7 oder von Mischung (P) gemäß Anspruch 8, wobei das Verfahren Folgendes umfasst:
(a) Inkontaktbringen von:
- mindestens einem Perfluorpolyetherpolymer mit peroxidischen Gruppen [PFPE-Peroxy];
- mindestens einer perfluorierten Verbindung der Formel (X-p): 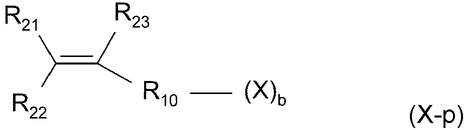 wobei
R₂₁ bis R₂₃ jeweils unabhängig für -F oder eine perfluorierte lineare oder verzweigte Alkylkette mit 1 bis 6 Kohlenstoffatomen stehen,
R₁₀, X und b wie in Anspruch 1 definiert sind;
(b) Reagierenlassen das PFPE-Peroxy und der Verbindung der Formel (X-p) in Gegenwart von UV-Strahlung oder unter Erhitzen;
vorzugsweise wobei:
- es sich bei dem PFPE-Peroxy um ein peroxidisches Perfluorpolyetherpolymer mit zwei Kettenenden, die jeweils eine Gruppe, die aus einer linearen oder verzweigten perfluorierten Alkylkette mit 1 bis 6 Kohlenstoffatomen oder -C(=O)F ausgewählt ist, umfassen, wobei die beiden Kettenenden an gegenüberliegende Seiten einer Perfluorpolyetherkette [Kette (R_{f})] gebunden sind, die Wiederholungseinheiten (R°), die unabhängig aus der Gruppe bestehend aus den Formeln (i) bis (v) gemäß Anspruch 4 ausgewählt sind, umfasst, und mit einem Peroxidgehalt (PO), der als Gramm Aktivsauerstoff (MW = 16) in 100 g PFPE-Peroxy definiert ist, zwischen 0,1 und 4 handelt;
und/oder
- die mindestens eine Verbindung der Formel (X-p) ausgewählt ist aus:
CF₂=CFCF₂OCF₂CF₂COOH
CF₂=CFOCF₂COOH
CF₂=CFO(CF₂)₅COOH
CF₂=CFOCF₂CF₂OCF₂COOH
CF₂=CFOCF₂CF₂COOH
CF₂=CFCF₂OCF₂CF₂COF
CF₂=CFOCF₂COF
CF₂=CFO(CF₂)₃OCF(CF₃)COF
CF₂=CFO(CF₂)₅COF
CF₂=CFOCF₂CF(CF₃)OCF₂CF₂CN
CF₂=CFOCF₂CN
CF₂=CFO(CF₂)₅CN
CF₂=CFO(CF₂)₃OCF(CF₃)CN
CF₂=CFCF₂OCF₂CF₂CN
CF₂=CFOCF₂CF₂Br
CF₂=CFCF₂OCF₂CF₂Br
CF₂=CFOCF₂CF(CF₃)OCF₂CF₂Br
CF₂=CFCF₂OCF₂CF₂CONH₂
CF₂=CFOCF₂CONH₂
CF₂=CFOCF₂CF₂CONH₂.

10. Blockcopolymer [Copolymer (P_{F})], umfassend eine erste und eine zweite Perfluorpolyetherkette [PFPE-Kette] mit jeweils zwei Kettenenden, wobei das erste Kettenende jeder der ersten und zweiten PFPE-Kette ein Kettenende von Copolymer (P_{F}) ist und jeweils eine Gruppe umfasst, die aus einer perfluorierten linearen oder verzweigten Alkylkette mit 1 bis 6 Kohlenstoffatomen; - COOH und Salzen davon mit einem organischen Kation oder einem anorganischen Kation; -COOR, wobei R für eine lineare oder verzweigte Alkylkette mit 1 bis 6 Kohlenstoffatomen steht; -COF; -CONH₂; -CON (R₁₀₀)(R₁₀₁), wobei R₁₀₀ und R₁₀₀ jeweils die gleichen Bedeutungen wie für R definiert haben; -(R)_{c}OH, wobei c für 0 oder 1 steht und R wie oben definiert ist; -C(O)-O-C(O)R, wobei R wie oben definiert ist; ausgewählt ist;
mit der Maßgabe, dass (i) mindestens ein Kettenende der ersten und zweiten PFPE-Kette eine Gruppe umfasst, die von einer perfluorierten linearen oder verzweigten Alkylkette mit 1 bis 6 Kohlenstoffatomen verschieden ist, und (ii) dann, wenn ein Kettenende eine Gruppe -COF umfasst, das andere Kettenende keine perfluorierte lineare oder verzweigte Alkylkette mit 1 bis 6 Kohlenstoffatomen oder -COF umfasst;
und die zweiten Kettenenden der ersten und zweiten PFPE-Kette über einen Block der Formel (I) aneinander gebunden sind:
(I) -[A-B]_{z}-
wobei
z für eine ganze Zahl von 1 bis 100 steht,
(A) für eine PFPE-Kette steht und
(B) für mindestens eine Gruppe der Formel (II) steht: 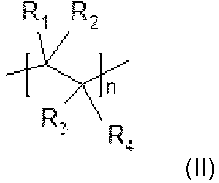
wobei
n für eine ganze Zahl von 1 bis 5 steht;
R₁ bis R₄ jeweils unabhängig ausgewählt ist aus der Gruppe umfassend -F, perfluorierte lineare oder verzweigte Alkylkette mit 1 bis 6 Kohlenstoffatomen und Gruppe der Formel (III):
(III) -R₁₀-(X)_{b}
wobei
R₁₀ für eine lineare oder verzweigte Perfluoralkylkette mit 1 bis 12 Kohlenstoffatomen, die gegebenenfalls ein oder mehrere Sauerstoffatome enthält, steht,
X für eine funktionelle Gruppe steht, die ausgewählt ist aus: -COOH und Salzen davon mit einem organischen Kation oder einem anorganischen Kation; -COOR, wobei R für eine lineare oder verzweigte Alkylkette mit 1 bis 6 Kohlenstoffatomen steht; -COF; -CON (R₁₀₀)(R₁₀₁), wobei R₁₀₀ und R₁₀₀ jeweils für ein Wasserstoffatom stehen oder die gleichen Bedeutungen wie für R definiert haben; -(R)_{c}OH, wobei c für 0 oder 1 steht und R für eine lineare oder verzweigte Alkylkette mit 1 bis 6 Kohlenstoffatomen steht; -C(O)-O-C(O)R, wobei R für eine lineare oder verzweigte Alkylkette mit 1 bis 6 Kohlenstoffatomen steht; -Br; -CN; und
b für eine ganze Zahl gleich 1 oder 2 steht;
wobei
* in der Formel (I) die (A) und (B) statistisch (zufällig) angeordnet sind;
* in Formel (II) mindestens eines, vorzugsweise eines, von R₁ bis R₄ für eine Gruppe der Formel (III) steht; und
* die Gesamtzahl der Gruppen B in dem Copolymer (P_{F}) 1 bis 100 beträgt.

11. Mischung [Mischung (P_{F})], umfassend zwei oder mehr Copolymere (P_{F}) gemäß Anspruch 10.

12. Blockcopolymer [Copolymer (P_{O-O})], umfassend eine erste und eine zweite Perfluorpolyetherkette [PFPE-Kette], die der Formel A oder (Rf_{O-O}) entspricht, wobei A wie oben definiert ist und (Rf_{O-O}) für eine Wiederholungseinheit steht, die einer der wie oben für (R°) definierten Formeln (i) bis (v) entspricht, und einen Peroxidgehalt (PO), der als Gramm Aktivsauerstoff (MW = 16) in 100 g PFPE-Peroxy definiert ist, zwischen 0,1 und 4 aufweist, wobei die erste und die zweite PFTE-Kette jeweils zwei Kettenenden aufweisen, wobei das erste Kettenende jeder der ersten und zweiten PFPE-Kette ein Kettenende von Copolymer (P_{F}) ist und jeweils eine Gruppe umfasst, die aus einer perfluorierten linearen oder verzweigten Alkylkette mit 1 bis 6 Kohlenstoffatomen; - COOH und Salzen davon mit einem organischen Kation oder einem anorganischen Kation; -COOR, wobei R für eine lineare oder verzweigte Alkylkette mit 1 bis 6 Kohlenstoffatomen steht; -COF; -CONH₂; -CON (R₁₀₀)(R₁₀₁), wobei R₁₀₀ und R₁₀₀ jeweils die gleichen Bedeutungen wie für R definiert haben; -(R)_{c}OH, wobei c für 0 oder 1 steht und R wie oben definiert ist; -C(O)-O-C(O)R, wobei R wie oben definiert ist; ausgewählt ist;
und die zweiten Kettenenden der ersten und zweiten PFPE-Kette über einen Block der Formel (I_{O-O}) aneinander gebunden sind:
(I_{O-O}) -[A-B-(Rf_{O-O}) ]_{z}-
wobei
z, A, B wie in Anspruch 1 definiert sind und
(RF_{O-O}) wie oben definiert ist,
wobei
* in Formel (I_{O-O}) A, B und (RF_{O-O}) statistisch (zufällig) angeordnet sind und
* die Gesamtzahl der Gruppen B in dem Copolymer (P_{O-O}) 1 bis 100 beträgt.

13. Mischung [Mischung (M1)], umfassend mindestens ein Copolymer (P) gemäß Ansprüchen 1 bis 7 und mindestens eines von dem PFPE-Peroxy gemäß Anspruch 9 und/oder einem oder mehreren der Copolymere (P_{O-O}) gemäß Anspruch 12.

14. Blockcopolymer [Copolymer (P_{F-O-O})], umfassend eine erste und eine zweite Perfluorpolyetherkette [PFPE-Kette], die der Formel A oder (Rf_{O-O}) entspricht, wobei A wie in Anspruch 1 definiert ist und (Rf_{O-O}) für eine Wiederholungseinheit steht, die einer der Formeln (i) bis (v) gemäß Anspruch 4 entspricht, und einen Peroxidgehalt (PO), der als Gramm Aktivsauerstoff (MW = 16) in 100 g PFPE-Peroxy definiert ist, zwischen 0,1 und 4 aufweist, wobei die erste und die zweite PFTE-Kette jeweils zwei Kettenenden aufweisen, wobei das erste Kettenende jeder der ersten und zweiten PFPE-Kette ein Kettenende von Copolymer (P_{F-O-O}) ist und jeweils eine Gruppe umfasst, die aus einer perfluorierten linearen oder verzweigten Alkylkette mit 1 bis 6 Kohlenstoffatomen; -COOH und Salzen davon mit einem organischen Kation oder einem anorganischen Kation; -COOR, wobei R für eine lineare oder verzweigte Alkylkette mit 1 bis 6 Kohlenstoffatomen steht; -COF; -CONH₂; -CON (R₁₀₀)(R₁₀₁), wobei R₁₀₀ und R₁₀₀ jeweils die gleichen Bedeutungen wie für R definiert haben; -(R)_{c}OH, wobei c für 0 oder 1 steht und R wie oben definiert ist; -C(O)-O-C(O)R, wobei R wie oben definiert ist; ausgewählt ist;
mit der Maßgabe, dass (i) mindestens ein Kettenende der ersten und zweiten PFPE-Kette eine Gruppe umfasst, die von einer perfluorierten linearen oder verzweigten Alkylkette mit 1 bis 6 Kohlenstoffatomen verschieden ist, und (ii) dann, wenn ein Kettenende eine Gruppe -COF umfasst, das andere Kettenende keine perfluorierte lineare oder verzweigte Alkylkette mit 1 bis 6 Kohlenstoffatomen oder -COF umfasst;
und die zweiten Kettenenden der ersten und zweiten PFPE-Kette über einen Block der Formel (I_{O-O}) aneinander gebunden sind:
(I_{O-O}) -[A-B-(Rf_{O-O}) ]_{z}-
z, A, B wie in Anspruch 1 definiert sind und
(RF_{O-O}) wie oben definiert ist,
wobei
* in Formel (I_{O-O}) A, B und (RF_{O-O}) statistisch (zufällig) angeordnet sind und
* die Gesamtzahl der Gruppen B in dem Copolymer (P_{F-O-O}) 1 bis 100 beträgt.

15. Mischung [Mischung (M2)], umfassend mindestens ein Copolymer (P_{F}) gemäß Anspruch 10 und mindestens eines von dem Copolymer (P) gemäß den Ansprüchen 1 bis 7, dem PFPE-Peroxy gemäß Anspruch 10, dem einen oder den mehreren Copolymeren (P_{O-O}) gemäß Anspruch 12 und/oder dem einen oder den mehreren Copolymeren (P_{F-O-O}) gemäß Anspruch 14.

## Revendications

1. Copolymère à blocs [copolymère (P)] comprenant une première et une deuxième chaîne de perfluoropolyéther [chaîne de PFPE] ayant chacune deux extrémités de chaîne, dans lequel la première extrémité de chaîne de chacune desdites première et deuxième chaînes de PFPE est une extrémité de chaîne du copolymère (P) et chacune comprend un groupe choisi parmi une chaîne alkyle linéaire ou ramifiée perfluorée comprenant de 1 à 6 atomes de carbone et -C(=O)F, et les deuxièmes extrémités de chaîne de ladite première et deuxième chaînes de PFPE sont liées l'une à l'autre par l'intermédiaire d'un bloc de formule (I) :
(I) -[A-B]_{z}-
dans laquelle
z est un entier de 1 à 100,
(A) est une chaîne de PFPE, et
(B) est au moins un groupe de formule (II) : 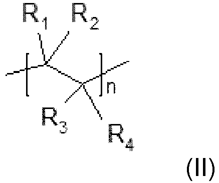
dans laquelle
n est un entier de 1 à 5, préférablement de 1 à 2 ;
R₁ à R₄, chacun indépendamment, sont choisis dans le groupe comprenant, préférablement constitué par, -F, une chaîne alkyle linéaire ou ramifiée perfluorée ayant de 1 à 6 atomes de carbone, et un groupe de formule (III) :
(III) -R₁₀-(X)_{b}
dans laquelle
R₁₀ est une chaîne perfluoroalkyle linéaire ou ramifiée comprenant de 1 à 12 atomes de carbone, préférablement contenant au moins un atome d'oxygène,
X est un groupe fonctionnel choisi parmi : -COOH, -COF, -CN, -Br et -CONH₂ ; et
b est un entier égal à 1 ou 2 ;
dans laquelle
* dans ladite formule (I), lesdits (A) et (B) sont disposés statistiquement (aléatoirement) ;
* dans la formule (II), au moins un, préférablement un, parmi R₁ à R₄ est un groupe de formule (III) ; et
* le nombre total desdits groupes B dans ledit copolymère (P) est de 1 à 100.

2. Copolymère (P) selon la revendication 1, dans lequel au moins une, préférablement une, des deux extrémités de chaîne comprend un groupe -C(=O)F et l'autre extrémité de chaîne comprend une chaîne alkyle perfluorée comprenant de 1 à 3 atomes de carbone.

3. Copolymère (P) selon la revendication 1 ou 2, dans lequel
- ledit au moins un bloc (A) est lié à une extrémité de chaîne et/ou audit au moins un bloc (B) via une liaison sigma ou un groupe -(C)- choisi parmi -CF₂-, -CF₂CF₂- ou -O- ; et/ou
- ledit au moins un bloc (B) est lié à une extrémité de chaîne et/ou audit au moins un bloc (A) via une liaison sigma ou un groupe -(C)- choisi parmi -CF₂-, -CF₂CF₂- ou -O-.

4. Copolymère (P) selon l'une quelconque des revendications précédentes, dans lequel chacune parmi ladite chaîne de PFPE est une chaîne entièrement fluorée [chaîne (R_{f})] comprenant des motifs répétitifs R°, lesdits motifs répétitifs étant choisis indépendamment dans le groupe constitué par :
(i) -CFXO-, où X est -F ou -CF₃ ;
(ii) -CFXCFXO-, où X, identique ou différent à chaque occurrence, est -F ou -CF₃, à condition qu'au moins l'un parmi X soit -F ;
(iii) -CF₂CF₂CF₂O- ;
(iv) -CF₂CF₂CF₂CF₂O- ;
(v) -(CF₂)ⱼ-CFZ-O- où j est un entier de 0 à 3 et Z est un groupe de formule générale -O-R_{(f-a)}-T, où R_{(f-a)} est une chaîne fluoropolyoxyalcène comprenant un nombre de motifs répétitifs de 0 à 10, lesdits motifs répétitifs étant choisis parmi les suivants : -CFXO-, -CF₂CFXO-, - CF₂CF₂CF₂O-, -CF₂CF₂CF₂CF₂O-, chacun parmi X étant indépendamment -F ou -CF₃ et T étant une chaîne C₁-C₃ perfluoroalkyle alkyle.

5. Copolymère (P) selon l'une quelconque des revendications précédentes, dans lequel :
- dans la formule (II), au moins l'un des substituants R₁ à R₄ est un groupe de formule (III) et les autres substituants sont choisis chacun indépendamment parmi -F ou une chaîne alkyle perfluorée ayant de 1 à 3 atomes de carbone ; et/ou
- dans ladite formule (III), b est 1 ; et/ou
- dans ladite formule (III), ledit R₁₀ est une chaîne perfluoroalkyle linéaire ou ramifiée comprenant 1 à 9 atomes de carbone et un ou deux atomes d'oxygène.

6. Copolymère (P) selon la revendication 5, dans lequel ledit R₁₀ répond à la formule suivante :
(R₁₀-i) -(CF₂)_{d}O-R_{CF}-
dans laquelle
d est zéro ou 1 et
R_{CF} est une chaîne perfluoroalkyle linéaire ou ramifiée comprenant 1 à 3 atomes de carbone ou une chaîne perfluoroalkyle linéaire ou ramifiée comprenant 1 à 6 atomes de carbone et au moins un atome d'oxygène.

7. Copolymère (P) selon l'une quelconque des revendications précédentes, dans lequel le bloc (I) répond à la formule (I-a) :
-[A-(B1)ₙ₁-(B2)ₙ₂-(Bx)ₙₓ]z- (I-a)
dans laquelle
chacun parmi z et A sont tels que définis dans la revendication 1,
chacun parmi B1, B2 et Bx est au moins un groupe de formule (II) tel que défini dans la revendication 1, et dans laquelle
* B1, B2 et Bx sont disposés aléatoirement dans le bloc (I) et
* chacun parmi n1, n2 et nx est zéro ou un entier de 1 à 5, à condition qu'au moins deux parmi n1, n2 et nx soient différents de zéro.

8. Mélange [mélange (P)] comprenant deux, ou plus, copolymères (P) tels que définis selon l'une quelconque des revendications 1 à 7.

9. Procédé [procédé (P)] pour la fabrication du copolymère (P) tel que défini dans l'une quelconque des revendications 1 à 7 ou du mélange (P) tel que défini dans la revendication 8, ledit procédé comprenant
(a) la mise en contact :
- d'au moins un polymère de perfluoropolyéther comprenant des groupes peroxydiques [PFPE peroxy] ;
- d'au moins un composé perfluoré de formule (X-p) : 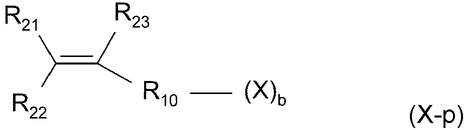 dans laquelle
chacun parmi R₂₁ à R₂₃ est indépendamment -F ou une chaîne alkyle linéaire ou ramifiée perfluorée ayant de 1 à 6 atomes de carbone,
R₁₀, X et b sont tels que définis dans la revendication 1 ;
(b) le fait de laisser ledit PFPE peroxy et ledit composé de formule (X-p) réagir en présence d'un rayonnement UV ou avec chauffage ;
de préférence dans lequel :
- ledit PFPE peroxy est un polymère de perfluoropolyéther peroxydique ayant deux extrémités de chaîne, chacune comprenant un groupe choisi parmi une chaîne alkyle linéaire ou ramifiée perfluorée comprenant de 1 à 6 atomes de carbone ou -C(=O)F, lesdites deux extrémités de chaîne étant liées aux côtés opposés d'une chaîne perfluoropolyéther [chaîne (R_{f})] comprenant des motifs répétitifs (R°) qui sont indépendamment choisis dans le groupe constitué par les formules (i) à (v) telles que définies dans la revendication 4 et ayant une teneur peroxydique (PO), définie en grammes d'oxygène actif (Mw = 16) dans 100 g de PFPE peroxy comprise entre 0,1 et 4 ;
et/ou
- ledit au moins un composé de formule (X-p) est choisi parmi :
CF₂=CFCF₂OCF₂CF₂COOH
CF₂=CFOCF₂COOH
CF₂=CFO(CF₂)₅COOH
CF₂=CFOCF₂CF₂OCF₂COOH
CF₂=CFOCF₂CF₂COOH
CF₂=CFCF₂OCF₂CF₂COF
CF₂=CFOCF₂COF
CF₂=CFO(CF₂)₃OCF(CF₃)COF
CF₂=CFO(CF₂)₅COF
CF₂=CFOCF₂CF(CF₃)OCF₂CF₂CN
CF₂=CFOCF₂CN
CF₂=CFO(CF₂)₅CN
CF₂=CFO(CF₂)₃OCF(CF₃)CN
CF₂=CFCF₂OCF₂CF₂CN
CF₂=CFOCF₂CF₂Br
CF₂=CFCF₂OCF₂CF₂Br
CF₂=CFOCF₂CF(CF₃)OCF₂CF₂Br
CF₂=CFCF₂OCF₂CF₂CONH₂
CF₂=CFOCF₂CONH₂
CF₂=CFOCF₂CF₂CONH₂.

10. Copolymère à blocs [copolymère (P_{F})] comprenant une première et une deuxième chaîne perfluoropolyéther [chaîne de PFPE] ayant chacune deux extrémités de chaîne, dans lequel la première extrémité de chaîne de chacune parmi lesdites première et deuxième chaînes de PFPE est une extrémité de chaîne du copolymère (P_{F}) et chacune comprend un groupe choisi parmi : une chaîne alkyle linéaire ou ramifiée perfluorée ayant de 1 à 6 atomes de carbone ; -COOH et ses sels avec un cation organique ou un cation inorganique ; -COOR où R est une chaîne alkyle linéaire ou ramifiée comprenant de 1 à 6 atomes de carbone ; -COF ; -CONH₂ ; -CON (R₁₀₀)(R₁₀₁) où chacun parmi R₁₀₀ et R₁₀₀ ont les mêmes significations que celles définies pour R ; -(R)_{c}OH, c étant 0 ou 1 et R étant tel que défini ci-dessus ; -C(O)-O-C(O)R, R étant tel que défini ci-dessus ;
à condition que (i) au moins une extrémité de chaîne parmi ladite première et deuxième chaînes de PFPE comprenne un groupe différent d'une chaîne alkyle linéaire ou ramifiée perfluorée ayant de 1 à 6 atomes de carbone et (ii) lorsqu'une extrémité de chaîne comprend un groupe -COF, l'autre extrémité de chaîne ne comprend pas une chaîne alkyle linéaire ou ramifiée perfluorée ayant de 1 à 6 atomes de carbone ou -COF ;
et les deuxièmes extrémités de chaîne desdites première et deuxième chaînes de PFPE sont liées l'une à l'autre via un bloc de formule (I) :
(I) -[A-B]_{z}-
dans laquelle
z est un entier de 1 à 100,
(A) est une chaîne de PFPE, et
(B) est au moins un groupe de formule (II) : 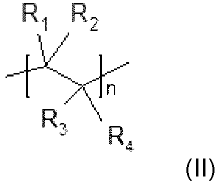
dans laquelle
n est un entier de 1 à 5 ;
R₁ à R₄, chacun indépendamment, sont choisis dans le groupe comprenant -F, une chaîne alkyle linéaire ou ramifiée perfluorée ayant de 1 à 6 atomes de carbone, et un groupe de formule (III) :
(III) -R₁₀-(X)_{b}
dans laquelle
R₁₀ est une chaîne perfluoroalkyle linéaire ou ramifiée comprenant de 1 à 12 atomes de carbone, contenant éventuellement un ou plusieurs atomes d'oxygène,
X est un groupe fonctionnel choisi parmi : -COOH et ses sels avec un cation organique ou un cation inorganique ; -COOR, R étant une chaîne alkyle linéaire ou ramifiée comprenant de 1 à 6 atomes de carbone ; -COF ; - CON (R₁₀₀)(R₁₀₁) où chacun parmi R₁₀₀ et R₁₀₀ est un atome d'hydrogène ou ont les mêmes significations que celles définies pour R ; -(R)_{c}OH, c étant 0 ou 1 et R étant une chaîne alkyle linéaire ou ramifiée comprenant de 1 à 6 atomes de carbone ; -C(O)-O-C(O)R, R étant une chaîne alkyle linéaire ou ramifiée comprenant de 1 à 6 atomes de carbone ; -Br ; -CN ; et
b est un entier égal à 1 ou 2 ;
dans laquelle
* dans ladite formule (I), lesdits (A) et (B) sont disposés statistiquement (aléatoirement) ;
* dans la formule (II), au moins un, préférablement un, parmi R₁ à R₄ est un groupe de formule (III) ; et
* le nombre total desdits groupes B dans ledit copolymère (P_{F}) est de 1 à 100.

11. Mélange [mélange (P_{F})] comprenant deux copolymères (P_{F}) tels que définis dans la revendication 10.

12. Copolymère à blocs [copolymère (P_{O-O})] comprenant une première et une deuxième chaînes de perfluoropolyéther [chaîne de PFPE] répondant à la formule A ou (Rf_{O-O}), dans laquelle A est telle que définie ci-dessus et (Rf_{O-O}) est un motif répétitif répondant à l'une quelconque des formules (i) à (v) telles que définies ci-dessus pour (R°) et ayant une teneur peroxydique (PO), définie comme grammes d'oxygène actif (Mw = 16) dans 100 g de PFPE peroxy entre 0,1 et 4, chacune desdites première et deuxième chaînes de PFPE ayant deux extrémités de chaîne, dans lequel la première extrémité de chaîne de chacune desdites première et deuxième chaînes de PFPE est une extrémité de chaîne de copolymère (P) et chacune comprend un groupe choisi parmi : une chaîne alkyle linéaire ou ramifiée perfluorée ayant de 1 à 6 atomes de carbone ; -COOH et ses sels avec un cation organique ou un cation inorganique ; -COOR où R est une chaîne alkyle linéaire ou ramifiée comprenant de 1 à 6 atomes de carbone ; -COF ; -CONH₂ ; - CON (R₁₀₀)(R₁₀₁) où chacun parmi R₁₀₀ et R₁₀₀ ont les mêmes significations que celles définies pour R ; -(R)_{c}OH, c étant 0 ou 1 et R étant tel que défini ci-dessus ; -C(O)-O-C(O)R, R étant tel que défini ci-dessus ;
et les deuxièmes extrémités de chaîne desdites première et deuxième chaînes de PFPE sont liées l'une à l'autre via un bloc de formule (I_{O-O}) :
(I_{O-O}) -[A-B-(Rf_{O-O}) ]_{z}-
dans laquelle
z, A, B sont tels que définis dans la revendication 1 et (Rf_{O-O}) est tel que défini ci-dessus,
dans laquelle
* dans la formule (I_{O-O}), A, B et (Rf_{O-O}) sont disposés statistiquement (aléatoirement) et
* le nombre total desdits groupes B dans ledit copolymère (P_{O-O}) est de 1 à 100.

13. Mélange [mélange (M1)] comprenant au moins un copolymère (P) tel que défini dans les revendications 1 à 7, et au moins un dudit PFPE peroxy tel que défini dans la revendication 9 et/ou un ou plusieurs dudit copolymère (P_{O-O}) tel que défini dans la revendication 12.

14. Copolymère à blocs [copolymère (P_{F-O-O})] comprenant une première et une deuxième chaîne perfluoropolyéther [chaîne de PFPE] répondant à la formule A ou (Rf_{O-O}), dans laquelle A est telle que définie dans la revendication 1 et (Rf_{O-O}) est un motif répétitif répondant à l'une quelconque des formules (i) à (v) telles que définies dans la revendication 4 et ayant une teneur en peroxydes (PO), définie en grammes d'oxygène actif (Mw = 16) dans 100 g de PFPE peroxy entre 0,1 et 4, chacune desdites première et deuxième chaînes de PFPE ayant deux extrémités de chaîne, dans laquelle la première extrémité de chaîne de chacune desdites première et deuxième chaînes de PFPE est une extrémité de chaîne de copolymère (P_{F-O-O}) et chacune comprend un groupe choisi parmi : une chaîne alkyle linéaire ou ramifiée perfluorée ayant de 1 à 6 atomes de carbone ; -COOH et ses sels avec un cation organique ou un cation inorganique ; -COOR où R est une chaîne alkyle linéaire ou ramifiée comprenant de 1 à 6 atomes de carbone ; -COF ; -CONH₂ ; - CON (R₁₀₀)(R₁₀₁) où chacun parmi R₁₀₀ et R₁₀₀ ont les mêmes significations que celles définies pour R ; -(R)_{c}OH, c étant 0 ou 1 et R étant tel que défini ci-dessus ; -C(O)-O-C(O)R, R étant tel que défini ci-dessus ;
à condition que (i) au moins une extrémité de chaîne parmi ladite première et deuxième chaînes de PFPE comprenne un groupe différent d'une chaîne alkyle linéaire ou ramifiée perfluorée ayant de 1 à 6 atomes de carbone et (ii) lorsqu'une extrémité de chaîne comprend un groupe -COF, l'autre extrémité de chaîne ne comprend pas une chaîne alkyle linéaire ou ramifiée perfluorée ayant de 1 à 6 atomes de carbone ou -COF ;
et les deuxièmes extrémités de chaîne desdites première et deuxième chaînes de PFPE sont liées l'une à l'autre via un bloc de formule (I_{O-O}) :
(I_{O-O}) -[A-B-(Rf_{O-O})]_{z}-
z, A, B sont tels que définis dans la revendication 1 et (Rf_{O-O}) est tel que défini ci-dessus,
dans laquelle
* dans la formule (I_{O-O}), A, B et (Rf_{O-O}) sont disposés statistiquement (aléatoirement) et
* le nombre total desdits groupes B dans ledit copolymère (P_{F-O-O}) est de 1 à 100.

15. Mélange [mélange (M2)] comprenant au moins un copolymère (P_{F}) tel que défini dans la revendication 10, et au moins un dudit copolymère (P) tel que défini dans les revendications 1 à 7, dudit PFPE peroxy tel que défini dans la revendication 10, dudit ou desdits copolymères (P_{O-O}) tels que définis dans la revendication 12, et/ou dudit ou desdits copolymères (P_{F-O-O}) tels que définis dans la revendication 14.
